# EUROPEAN PATENT APPLICATION

(11) **EP 4 593 436 A1**
(43) Date of publication of application: **30.07.2025**
(21) Application number: 24154450.1
(22) Date of filing: 29.01.2024
(51) Int. Cl.: H04W 8/20, G06F 12/02

(54) **RELIABLE EUICC REMOTE SIM PROVISIONING BY CONTROLLING THE MEMORY WEAR LEVEL**

(71) Applicant: Giesecke+Devrient Mobile Security Germany GmbH, 81677 München (DE)
(72) Inventor: Hukeri, Manoj Vyankatesh, 411021 Pune (IN); Vinchhi, Tapan, 4110017 Pune (IN); Pandey, Ankit, 412101 Pune (IN)
(74) Representative: Giesecke+Devrient IP

(57) **Abstract**

A method for remote SIM provisioning to an eUICC, which comprises at least one profile memory (3) embodied as a nonvolatile memory NVM, comprising the steps:
- perform a remote SIM provisioning measure effecting the profile memory (3) by one or several write or/and erase operations;
characterized by the step: - before the step to perform a remote SIM provisioning measure, verify a wear measure indicator (1) indicative of a grade of wear of the profile memory (3), and control the remote SIM provisioning measure according to a result of verifying the wear measure indicator (1).

## Description

### Field of the invention

The present invention relates to reliable eUICC Remote SIM Provisioning (RSP).

### Background of the invention and prior art

Mobile devices, i.e. devices having capability to communicate in a mobile network (radio communication network), are known in several forms, including consumer mobile devices like Smartphones, Automotive mobile devices designed to be hosted in an automobile, and also loT mobile devices, designed to be operated in an loT mobile network environment. The mobile device hosts an eUICC (embedded Universal Integrated Circuit Card) containing one or several profiles, also referred to as subscriber profiles, which enable the devices to attach to mobile networks in an authenticated manner.

State of the art eUICCs allow SIM (Subscriber Identity Module) provisioning, which includes to download new profiles to the eUICC, update present profiles, delete present profiles, and enable or disable, activate or deactivate present profiles.

Remote SIM provisioning, also referred to as RSP, is specified in several specifications edited by the GSMA organization, particularly [1] [SGP.22] GSMA SGP.22 RSP Technical Specification Version 3.0, 19 October 2022, and [2] [SGP.32] GSMA SGP.32 eSIM IoT Technical Specification Version 1.0.1, 04 July 2023.

In combination with the present invention, an eUICC can have different form factors, including, plug-in UICC pUICC which is also referred to as SIM card, embedded UICC eUICC in a narrower sense, and integrated UICC iUICC incorporated into a chipset or board of the mobile device hosting the eUICC.

An eUICC includes a processing entity and a profile memory, which comprises one or several profile associated memories. The profile memory includes at least one profile associated memory in which one or several profiles are stored, and at least one further profile associated memory, which may for example include an NVM heap memory, in which data used by an active or enabled profile during operation of said active or enabled profile are stored. The profile memory is embodied as a nonvolatile memory NVM, implying that the profile associated memories are implemented as nonvolatile memories NVMs. In addition, the eUICC comprises a volatile random access memory, RAM memory. In an iUICC, there can be an external profile memory eNVM outside the iUICC but within the chipset as a first profile NVM, and an internal profile memory iNVM within the iUICC as a second profile NVM. In an iUICC, there can be one or several external profile associated memories outside the iUICC but within the chipset, and one or several internal profile associated memories within the iUICC.

Remote SIM provisioning to the profile NVM leads to increasing wear of the profile memory, and in case of extreme wear can lead to failure of a profile or of the entire eUICC, decreasing the reliability of the remote SIM provisioning.

### Objective of the invention

It is an object of the present invention to provide a controlled method for remote SIM provisioning which can help to reduce the risk of failure of a profile or eUICC due to wear of the profile memory and increases the reliability of the remote SIM provisioning.

### Summary of the invention

The object of the invention is achieved by a method with following features, according to claim 1. Embodiments of the invention are presented in dependent claims.

In greater detail, the object of the invention is achieved by a method for remote SIM provisioning to an eUICC, which comprises a profile memory embodied as a nonvolatile memory NVM, comprising the steps:
- perform a remote SIM provisioning measure effecting at least part of the profile memory by one or several erase operations, or/and possibly also write operations;
characterized by the step:
- before the step to perform a remote SIM provisioning measure, verify a wear measure indicator indicative of a grade of wear of the profile memory, or of the grade of wear of the effected at least part of the profile memory, and control the remote SIM provisioning measure according to a result of verifying the wear measure indicator.

Due to measuring the wear of the profile memory before performing the SIM provisioning measure, the opportunity is opened to abort the SIM provisioning measure when the wear of the profile memory is rated too severe, or to adopt or tailor the SIM provisioning measure to cope of the measured grade of wear, or to otherwise control the remote SIM provisioning measure according to a result of verifying the wear measure indicator. The risk of failure of a profile or eUICC due to wear of the profile memory is thus reduced, and hereby the reliability of the remote SIM provisioning increased.

Preferably, the method further comprises the step:
- after the step to perform a remote SIM provisioning measure, update the wear measure indicator (1) according to the performed remote SIM provisioning measure.

According to some embodiments, as a remote SIM provisioning measure, there is provided one or several of the following:
- download a profile to the profile memory;
- delete a profile from the profile memory;
- update a profile present in the profile memory;
- enable a profile present in the profile memory;
- disable a profile present in the profile memory;
- update one or several memory elements, said one or several memory elements comprising one or several of: one or several files in a file system of a profile, one or several objects, one or several Java objects, one or several data elements, one or several updates of data elements.

According to some embodiments, a status of the wear measure indicator at one or several specific points in processing the profile memory is stored in the eUICC, as one or several snapshot or snapshots representative of a current grade of wear of the profile memory at the respective point or points in processing, wherein the point or points in processing include one or several of the following:
- a processing point before said remote SIM provisioning measure effecting the profile memory;
- a processing point during said remote SIM provisioning measure effecting the profile memory;
- a processing point after said remote SIM provisioning measure effecting the profile memory.

The snapshot provides an easy-to-handle valuation tool to enable an adequate control or tailoring of the scheduled SIM provisioning measure.

According to some embodiments of snapshotting, the method further comprises derivation of a derived snapshot, herein performing one or several of the following steps to derive the derived snapshot:
- comparing two or three or more, or multiple, snapshots to each other;
- statistically analyzing two or three or more, or multiple, snapshots.

According to some embodiments, when said grade of wear of the profile memory indicated by said wear measure indicator violates a prescribed acceptable grade of wear, a wear measure is initiated or taken.

Said wear measure may comprises one or several of the following:
- setting a wear flag indicative that one or several memory pages or the profile memory, or the entire profile memory, have a grade of wear violating the prescribed acceptable grade of wear;
- prevent further erase or/and write operations to said page or pages of the profile memory, or to the entire profile memory.

Further with respect to the wear measure, the prescribed acceptable grade of wear may be rated as violated in a case when one or several of the following conditions apply:
- a count exceeds a limit count,
- said a wear flag is set;
- a snapshot or derived snapshot as outlined above indicates a violation of said acceptable grade of wear;
- an implementation specific or/and a business logic specific condition is fulfilled.

According to some embodiments, to verify the wear measure indicator, the wear measure indicator counts a number of erase operations to the profile memory or to one or several pages of the profile memory, and in case the count exceeds an allowable limit, takes or initiates a wear measure.

According to some embodiments, the profile memory is embodied as a flash memory organized in memory pages, wherein, to verify the wear measure indicator, the wear measure indicator separately counts a number of erase operations to each memory page, and in case the count for a memory page exceeds a limit, takes or initiates a wear measure. Wherever erase operations are mentioned to be counted, instead of or in addition to erase operations, write operations may be counted. However, in a flash memory, counting erase operations is an efficient measure, since in a flash memory, write operations require a previous erase operation.

Further, in said flash memory, the wear measure indicator may calculate and store a page checksum over each count of a single page, and wherein, to verify the wear measure indicator, the page checksum is verified.

Further, in said flash memory, the wear measure indicator may calculate and store a checksum over all counts of some of or all single pages of the profile memory, wherein, to verify the wear measure indicator, the checksum is verified.

Further, in said flash memory, the counts (which could be seen as wear counts) of single pages up to every single page of the profile memory, and if present page checksums and/or checksum, may be stored in the eUICC as a grade of wear snapshot representative of a current grade of wear of the profile memory.

The wear measure, according to some embodiments, comprises one or several of the following:
- setting a wear flag indicative that one or several memory pages or the profile memory, or the entire profile memory, have a grade of wear violating the prescribed acceptable grade of wear;
- prevent further erase or/and write operations to said page or pages of the profile memory, or to the entire profile memory.

According to some embodiments, the eUICC further comprises a volatile working memory RAM, in which a RAM log associated to the wear measure indicator is provided, and in which RAM log one or several counts of the wear measure indicator are temporarily stored.

According to some embodiments, at least one profile is stored in the profile memory, which profile is in an activated or enabled state, and wherein the wear measure indicator is indicative (especially or preferably exclusively) of the profile memory effected by the activated or enabled profile.

### Brief description of the drawings

Embodiments of the invention will now be described with reference to the accompanying drawings, throughout which like parts are referred to by like references, and in which represents:
- Fig. 1: a schematic representation of an implementation of a wear measure indicator indicative of a grade of wear of a profile memory of an eUICC, the wear measure indicator (1) embodied as an NVM memory page write counter, according to an embodiment of the invention;
- Fig. 2: a flowchart showing a method to ensure that count or counts in the wear measure indicator of Fig. 1, or a similar wear measure indicator, are correctly retrieved on RESET / power up of the eUICC.
- Fig. 3: a flowchart showing a method to update temporarily, in a volatile working memory RAM of a eUICC, a wear measure indicator using a one byte counter counting counts for erase operations to memory pages of a profile memory embodied as a flash memory;
- Fig. 4: a flowchart showing a method to measure wear measure indicator for a profile which can be used to provide ranking to the profile under consideration. Also overall wear measure indicator of the eUICC can be used to gauge health of eUICC Profile memory and be used to allow or disallow loading/enabling of the profile under consideration.

### Detailed description of the invention

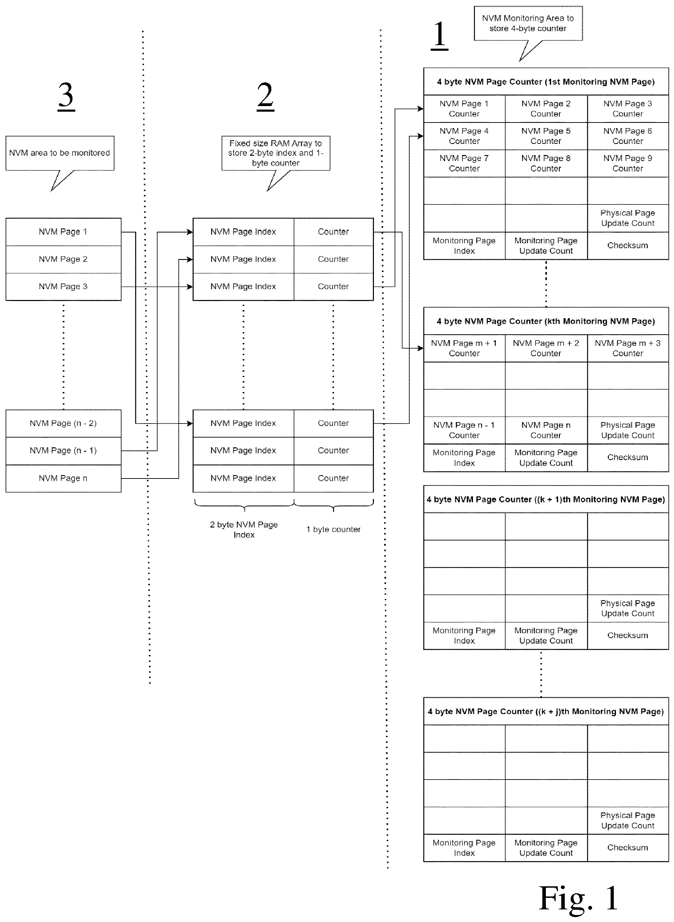

Fig. 1 shows a schematic representation of an implementation of a wear measure indicator 1 indicative of a grade of wear of a profile memory 3 of an eUICC, the wear measure indicator 1 embodied as an NVM memory page counter, according to an embodiment of the invention. The wear measure indicator 1 / NVM memory page counter is embodied as an NVM memory page erase counter of size 4 bytes and is embodied as a flash NVM memory organized in memory pages, comprising (k + j) NVM memory pages: 1^{st} Monitoring NVM Page, 2^{nd} Monitoring NVM Page, ... k^{th} Monitoring NVM Page, (k + 1)^{th} Monitoring NVM Page, ... (k + j)^{th} Monitoring NVM Page. The profile memory 3 to be monitored by the wear measure indicator 1 is embodied as a flash NVM memory organized in memory pages, comprising n NVM memory pages: NVM Page 1, NVM Page 2, NVM Page 3, ... NVM Page (n-2), NVM Page (n-1), NVM Page n. Further, associated to the wear measure indicator 1, there is a temporary log register 2 of fixed length, in a volatile working memory RAM of the eUICC, which includes Index fields for storing 2 byte NVM Page Index of n NVM Pages of profile memory 3, 1 byte counter field for storing counter counts related to NVM Pages indicated by an NVM Page Index.

The wear measure indicator 1 includes according to Fig. 1, for each of the n NVM Pages of the profile memory 3, a counter counting erase operations effected at the respective NVM Page of the profile memory 3. Each counter stored temporarily in the temporary log register 2 in the volatile memory of eUICC is indexed with an NVM Page Index of the NVM Page in the profile memory 3 to which the counter is related. In the embodiment of Fig. 1, each counter entry in the temporary log register 2 in the volatile memory for an NVM Page of profile memory 3 includes two bytes containing the NVM Page Index, and one byte for the counter.

A Monitoring NVM Page in the overall wear measure indicator 1 holds a wear measure indicator 1 section of 4 bytes per Profile NVM page, for all of Profile NVM pages. Each Monitoring NVM Page can hold a wear measure indicator section of 4 bytes for a group of consecutive Profile NVM pages depending directly on the NVM page size after subtracting the metadata requirement. Additionally each Monitoring NVM page holds some meta data, which may include or be realized as Monitoring Page Index, Monitoring Page wear measure indicator, Physical NVM Page wear measure indicator and checksum of the Monitoring Page content. Based on the number of NVM pages the in profile memory 3, NVM Page Size and size of metadata per NVM Monitoring Page in the wear measure indicator 1, if k NVM Monitoring Pages are required, then we may allocate (k + j) NVM Monitoring Pages. Additional j NVM Monitoring Pages are in this case allocated to increase the Lifetime of NVM Monitoring Area.

Whenever a remote SIM provisioning measure is executed, wherein erase operations are executed on one or several of the Profile NVM Pages in the profile memory 3, then the counters of the respective NVM Pages in the wear measure indicator 1 which are effected by the remote SIM provisioning measure are increased by one count and hereby updated, herein also creating a new entry in the RAM Log 2. If several erase operations occur at one Page, then the count is increased by the respective number of several counts in the RAM Log 2. In event of either all RAM Entries getting consumed or any wear measure indicator 1 section exceeding a pre-defined threshold, all the counter value of entries in the RAM log 2 are added to wear measure indicator Counters of respective Profile NVM Pages, which are 4 bytes in size, and updated counters are stored in NVM Monitoring Memory along with updated metadata. An unused NVM Monitoring Page in the wear measure indicator 1 is used whenever we update the Counters in NVM Monitoring Memory of the wear measure indicator 1. This is done to enhance the lifetime of NVM Monitoring region.

The combination of checksum and Monitoring Page wear measure indicator 1 is used to identify NVM Monitoring Pages with valid and latest wear measure indicator count for a particular Monitoring Page Index. Physical NVM Page wear measure indicator shall be used to identify which free NVM Monitoring Page to be used whenever RAM Log entries are flushed into NVM Monitoring Pages.

The entirety of the entries in the counter fields in NVM Monitoring Pages of the wear measure indicator 1, after a remote SIM provisioning measure to load/enable a profile or anything else to the profile memory 3 has been executed, is also referred to as a snapshot of the wear status of the NVM as indicated by the wear measure indicator 1.

After a remote SIM provisioning measure to delete/disable a profile or anything else in the profile memory 3, a current snapshot of the wear measure indicator 1 can be taken and be compared with a snapshot of the wear measure indicator 1 taken before or/and during load/enable of the profile or other content. Based on the comparison of the snapshots before, during and/or after the SIM profile (or other content) delete/disable, is the snapshots and their evolution throughout the profile delete/disable can be statistically analyzed, and based on the analysis, the profile (or other content) being deleted/disabled can be ranked by the eUICC, for example as beneficial, neutral or harmful to the eUICC.

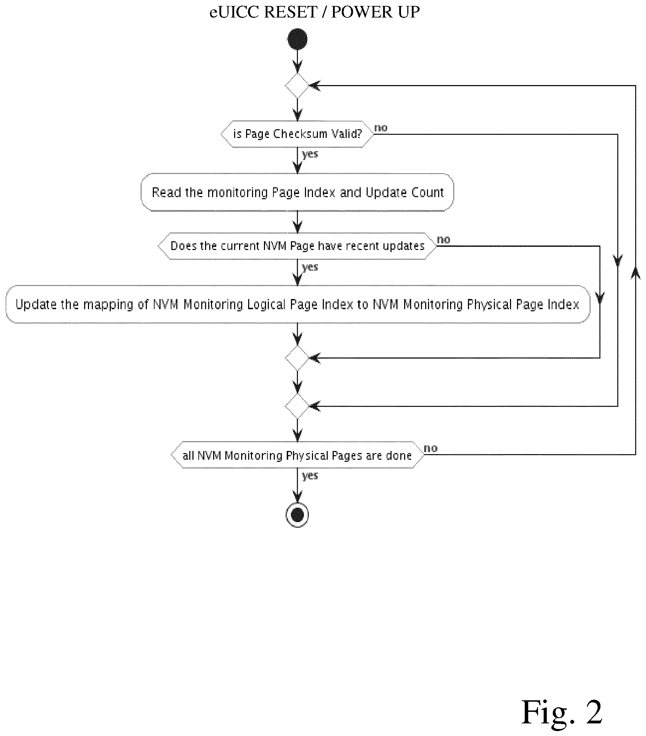

Fig. 2 shows a flowchart showing a method to identify the latest count in the wear measure indicator 1 of Fig. 1, or a similar wear measure indicator, on the occasion of eUICC reset, according to an embodiment of the invention. According to Fig. 2, a combination of checksum and Monitoring Page wear measure indicator 1 is used identify NVM Monitoring Pages with valid and latest wear measure indicator 1 count for a particular Monitoring Page Index.

The eUICC receives a RESET or/and a power on INIT, and all the NVM Monitoring Pages having a valid checksum are marked as valid. In case a NVM Monitoring Page has an invalid checksum, this indicates that a tear has occurred during update of that NVM Monitoring Page, and hence the NVM Monitoring Page does not contain a valid Wear measure Indicator 1, and hence is marked as free page. In event of two or more monitoring pages which are marked as valid have same monitoring page index, then the respective page having the highest value of Monitoring Page wear measure indicator is marked as valid while others are marked as invalid. All pages which are marked invalid shall be used as free pages for later updates. This process of identifying valid pages and free pages is performed during each eUICC power on INIT.

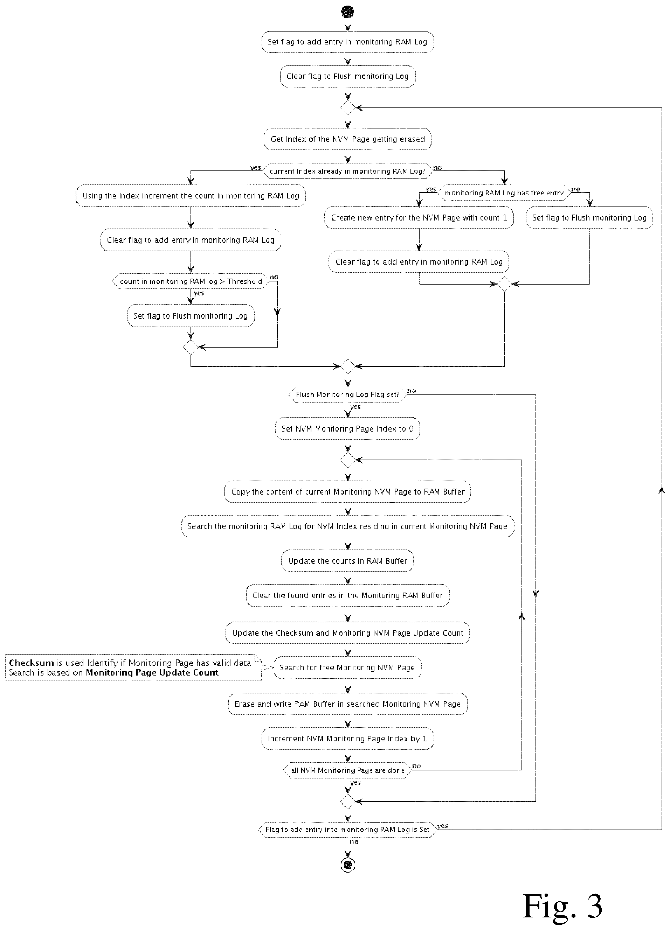

Fig. 3 shows a flowchart showing a method to update, in a volatile working memory RAM of an eUICC, a RAM log 2 associated to a wear measure indicator 1 using a counter counting counts for erase operations to memory pages of a profile memory, on the occasion of a remote SIM provisioning measure and conditions on which these counters of the RAM log 2 in volatile working memory RAM of eUICC are transferred to the corresponding NVM Monitoring Page Index. The profile memory 3 is embodied as a flash memory, herein using an 16 bit page index value for each individual profile memory 3 page. The counter of the RAM log 3 in the volatile working memory RAM of an eUICC, includes a Page Index field holding a Page Index entry, and a counter field holding a count entry, as shown in Fig. 1, for each memory page. In event of either all RAM Entries of the RAM log 2 getting consumed or any wear measure indicator 1 exceeding a pre-defined threshold, all the entries in the RAM are added to wear measure indicator Counters which are 4 bytes stored in NVM Monitoring Memory and all the RAM entries are freed up for further updates.

Whenever an erase operation is performed for a profile memory 3 page, the Page Index and counter count of the concerned memory page are transferred to RAM log 2 in the volatile working memory RAM of the eUICC if the Page Index entry is already present in the RAM log 2 in the volatile working memory RAM of the eUICC. Subsequently, the count is reviewed if it exceeds a predefined limit count, and if this is the case, then a flag it set to indicate to flush the counters in RAM Log 2 to corresponding NVM Monitoring Pages. The flag to add entry in RAM Log 2 is cleared.

In case the Page Index entry is not present in the RAM log 2 in the volatile working memory RAM of the eUICC, then it is checked if a free entry is available into the volatile working memory RAM of the eUICC and the counter is updated by value 1. In event where all the entries in the RAM log 2 of the eUICC used, a flag it set to indicate to flush the counters in the RAM log 2 to corresponding NVM Monitoring Pages. The flag to add entry in RAM Log 2 is set

If the flag to flush the counters in the RAM log is set, then for each of the k monitoring pages, the content of currently selected monitoring page may be copied into a RAM Buffer of NVM Page Size. A search for all entries in the RAM Log 2 that reside in the currently selected monitoring page is performed, and the count value is added in the RAM Log 2 Entry to a corresponding counter value in NVM page Size RAM Buffer, and then the entry in the RAM Log 2 is cleared. When all relevant RAM Log Entries are flushed as mentioned above, the RAM Buffer of the NVM Page Size is written back to a new free NVM Monitoring Page with updated meta data which may include or consist of, checksum, Monitoring Page wear measure count, physical Page wear measure count and logical Monitoring Page Index. If the flag to add an entry into the RAM Log 2 is Set, then an entry of the current profile NVM Page is made in the RAM Log 2 with count of value 1.

NVM Monitoring Pages hold the NVM Wear Measure Count of all the Profile NVM Pages since the eUICC is personalized in production and are never reset.

The wear Measure count of all the Profile NVM Pages can be used to gauge the overall health of the eUICC Profile Memory 3.

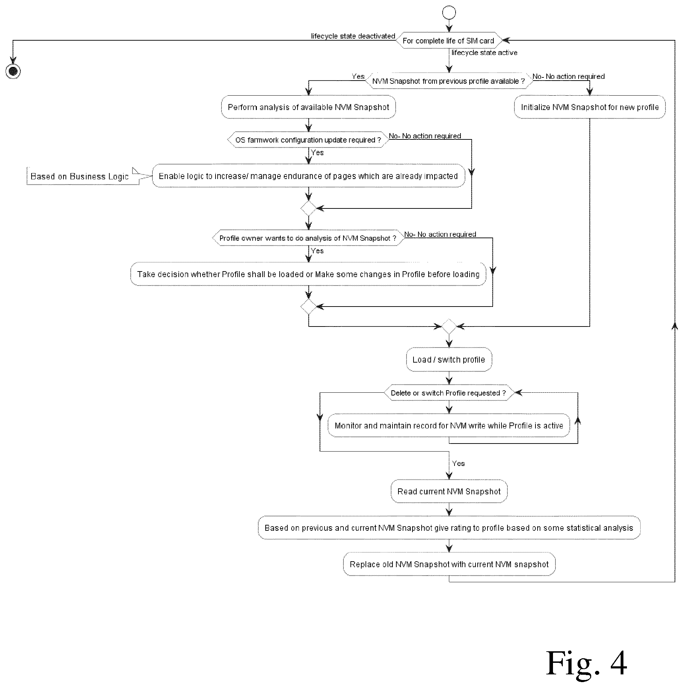

Fig. 4 shows a mechanism by which the underlying wear measure counter 1 for the profile Memory 3 can be used to provide a wear measure indicator for a particular profile in an eUICC. Whenever a remote SIM provisioning measure to enable a profile is performed, a snapshot of the wear measure indicator 1 for the entire profile NVM memory 3 is taken and stored by eUICC OS (operating system). Additionally, based on the overall health of the eUICC profile memory 3 and profile ranking, the eUICC may allow or disallow the enablement of a new profile, which can be controlled by customer configuration. When a remote SIM provisioning measure to disable a profile is performed, the difference between a current wear indicator snapshot with a previously stored snapshot is computed and cumulatively stored as wear measure indicator for the disabled profile.

When a particular profile gets deleted, the wear measure indicator for 1 profile is statistically analyzed and a profile ranking shall be provided to the disabled profile by eUlCC

The wear measure indicator 1 can be used internally by eUICC OS to avoid Profile NVM pages with high level of measure indicator count thereby increasing the overall lifetime of eUICC. The description of this mechanism is out of scope for this patent.

### Cited documents

*[1] [SGP.22] GSMA SGP.22 RSP Technical Specification Version 3.0, 19th October 2022
[2] [SGP.32] GSMA SGP.32 eSIM loT Technical Specification Version 1.0.1, 04 July 2023

## Claims

1. A method for remote SIM provisioning to an eUICC, which comprises a profile memory (3) embodied as a nonvolatile memory NVM, comprising the steps:
- perform a remote SIM provisioning measure effecting at least part of the profile memory (3) by one or several erase operations, or/and optionally write operations;
**characterized by** the step:
- before the step to perform a remote SIM provisioning measure, verify a wear measure indicator (1) indicative of a grade of wear of the profile memory (3), or of the grade of wear of the effected at least part of the profile memory (3), and control the remote SIM provisioning measure according to a result of verifying the wear measure indicator (1).

2. The method according to claim 1, further comprising the step:
- after the step to perform a remote SIM provisioning measure, update the wear measure indicator (1) according to the performed remote SIM provisioning measure.

3. The method according to claim 1 or 2, wherein as a remote SIM provisioning measure, there is provided one or several of the following:
- download a profile to the profile memory;
- delete a profile from the profile memory;
- update a profile present in the profile memory;
- enable a profile present in the profile memory;
- disable a profile present in the profile memory;
- update one or several memory elements, said one or several memory elements comprising one or several of: one or several files in a file system of a profile, one or several objects, one or several Java objects, one or several data elements, one or several updates of data elements.

4. The method according to any of claims 1 to 3, wherein a status of the wear measure indicator (1) at one or several specific points in processing the profile memory (3) is stored in the eUICC, as one or several snapshot or snapshots representative of a current grade of wear of the profile memory (3) at the respective point or points in processing, wherein the point or points in processing include one or several of the following:
- a processing point before said remote SIM provisioning measure effecting the profile memory (3);
- a processing point during said remote SIM provisioning measure effecting the profile memory (3);
- a processing point after said remote SIM provisioning measure effecting the profile memory (3).

5. The method according to claim 4, further comprising derivation of a derived snapshot, herein performing one or several of the following steps to derive the derived snapshot:
- comparing two or three or more snapshots to each other;
- statistically analyzing two or three or more snapshots.

6. The method according to any of claims 1 to 5, wherein when said grade of wear of the profile memory (3) indicated by said wear measure indicator (1) violates a prescribed acceptable grade of wear, a wear measure is initiated or taken.

7. The method according to claim 6, wherein the wear measure comprises one or several of the following:
- setting a wear flag indicative that one or several memory pages of the profile memory (3), or the entire profile memory (3), have a grade of wear violating the prescribed acceptable grade of wear;
- prevent further erase or/and write operations to said page or pages of the profile memory (3), or to the entire profile memory (3).

8. The method according to claim 6 or 7, wherein the prescribed acceptable grade of wear is violated in a case when one or several of the following conditions apply:
- a count exceeds a limit count,
- said wear flag is set;
- a snapshot according to claim 4 or derived snapshot according to claim 5 indicates a violation of said acceptable grade of wear;
- an implementation specific or/and a business logic specific condition is fulfilled.

9. The method according to any of claims 1 to 8, wherein, to verify the wear measure indicator (1), the wear measure indicator (1) counts a number of erase operations to the profile memory (3) or to one or several pages of the profile memory (3), and in case the count exceeds an allowable limit, takes or initiates a wear measure.

10. The method according to any of claims 1 to 9, wherein the profile memory (3) is embodied as a flash memory organized in memory pages, and wherein, to verify the wear measure indicator (1), the wear measure indicator (1) separately counts a number of erase operations to each memory page, and in case the count for a memory page exceeds an allowable limit, takes or initiates a wear measure.

11. The method according to claim 10, wherein the wear measure indicator (1):
- calculates and stores a page checksum over each count of a single page, and wherein, to verify the wear measure indicator (1), the page checksum is verified; or/and
- calculates and stores a checksum over all counts of some of or all single pages of the profile memory (3), and wherein, to verify the wear measure indicator (1), the checksum is verified.

12. The method according to any of claims 10 to 11, wherein the counts of single pages, particularly of every single page, of the profile memory, and if present page checksums and/or checksum, are stored in the eUICC as a grade of wear snapshot representative of a current grade of wear of the profile memory.

13. The method according to any of claims 9 to 12, wherein the wear measure comprises one or several of the following:
- setting a wear flag indicative that one or several memory pages or the profile memory (3), or the entire profile memory (3), have a grade of wear violating the prescribed acceptable grade of wear;
- prevent further erase or/and write operations to said page or pages of the profile memory (3), or to the entire profile memory (3).

14. The method according to any of claims 1 to 13, wherein the eUICC further comprises a volatile working memory RAM, in which a RAM log (2) associated to the wear measure indicator (1) is provided, and in which RAM log (2) one or several counts of the wear measure indicator (1) are temporarily stored.

15. The method according to any of claims 1 to 14, wherein at least one profile is stored in the profile memory (3), which profile is in an activated or enabled state, and wherein the wear measure indicator (1) is indicative of the profile memory effected by the activated or enabled profile.
